(19) Europäisches Patentamt
European Patent Office
Office européen des brevets

(11) Veröffentlichungsnummer: **0 224 525**
**B1**

(12) **EUROPÄISCHE PATENTSCHRIFT**

(45) Veröffentlichungstag der Patentschrift: **27.12.90**

(51) Int. Cl.⁵: **G 01 B 11/08**

(21) Anmeldenummer: **86903358.9**

(22) Anmeldetag: **31.05.86**

(86) Internationale Anmeldenummer:
**PCT/EP86/00326**

(87) Internationale Veröffentlichungsnummer:
**WO 86/07442 18.12.86 Gazette 86/27**

(54) **VERFAHREN UND VORRICHTUNG ZUM ERMITTELN DER ABMESSUNGEN EINES LÄNGLICHEN PRÜFOBJEKTES.**

(30) Priorität: **13.06.85 DE 3521260**

(43) Veröffentlichungstag der Anmeldung:
**10.06.87 Patentblatt 87/24**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**CH-A- 396 425**
**FR-A-2 469 697**
**US-A-4 471 823**
**US-A-4 515 196**

**Patents Abstracts of Japan, Band 9, Nr. 141,
(P-364)(1864) 15. Juni 1985 & JP-A-6021408**

(73) Patentinhaber: **OMT Optoelektronische
Messtechnik GmbH
Frankfurter Ring 115
D-8000 München 40 (DE)**

(72) Erfinder: **DASSLER, Hans-Ulrich
Mittenheimerstr. 6
D-8042 Oberschleissheim (DE)**
Erfinder: **HAAS, Rüdiger
Weidenstr. 9
D-8011 Faistenhaar (DE)**
Erfinder: **LöFFLER, Gerhard
Karl-Theodor-Str. 93
D-8000 München 40 (DE)**

(74) Vertreter: **Konle, Tilmar, Dipl.-Ing.
Benderstrasse 23 a
D-8000 München 60 (DE)**

Courier Press, Leamington Spa, England.

**Beschreibung**

Die Erfindung bezieht sich auf ein Verfahren gemäß dem Oberbegriff des Patentanspruchs 1 sowie auf eine Vorrichtung gemäß dem Oberbegriff des Patentanspruchs 3. Ein Verfahren und eine Vorrichtung dieser Art sind aus der US-A-4 471 823 bekannt.

Bei der Herstellung oder Bearbeitung von Außendrehteilen, insbesondere Wellen, werden zur Abmessungskontrolle Prüfobjekte aus der laufenden Fertigung entnommen und mit Meßlehren (Mikrometerschrauben oder dergleichen) von Hand auf ihre Maßhaltigkeit und Rundheit überprüft. Bei längeren Prüfobjekten erfolgt diese Überprüfung an mehreren Stellen längs der Rotationsachse des Prüfobjektes.

Eine solche manuelle Abmessungskontrolle ist mühsam, zeitraubend und fehlerbehaftet. Zudem müssen festgestellte Toleranzüberschreitungen per Hand in die Produktions-ablaufsteuerung eingegeben werden, so daß insgesamt die bekannte Abmessungskontrolle mit erheblicher Zeitverzögerung zwischen dem Auftreten und der Beseitigung einer unzulässigen Maßabweichung arbeitet, was eine entsprechende hohe Ausschußproduktion zur Folge hat.

Aus der US-A-4 471 823 ist es zur Positionierung von Baumstämmen vor deren Zerteilung weiterhin bereits bekannt, den Baumstamm durch eine Meßstation zu bewegen. Die Meßstation besteht aus einem rechteckförmigen Rahmen mit linienförmig aufgebrachten, vertikalen und horizontalen Lichtschranken, die in einer gemeinsamen Meßebene liegen. Die elektro-optischen Wandler derjenigen Lichtschranken, welche beim Hindurchtritt des Baumstammes unbelichtet bleiben, werden detektiert, wobei aus der bekannten Lage und dem bekannten Abstand zwischen den Wandlern zu jedem Meßzeitpunkt zwei senkrecht zueinander orientierte Durchmesser des Baumstammes ermittelt werden können. Diese Vermessung ergibt jedoch nur relativ grobe Ergebnisse, die für industrielle Prüfobjekte ungeeignet sind.

Die Aufgabe der Erfindung besteht demgegenüber darin, ein Verfahren und eine Vorrichtung der eingangs erwähnten Art zu schaffen, welche im Sinne einer automatischen Abmessungskontrolle eine rasche, präzise Überprüfung industrieller Prüfobjekt und damit eine wesentliche Verringerung der Ausschußproduktion ermöglicht.

Diese Aufgabe wird erfindungsgemäß durch die Merkmale des unabhängigen Patentanspruchs 1 bzw. 3 gelöst.

Vorteilhafte Ausgestaltungen des Verfahrens nach Patentanspruch 1 ergeben sich aus dem Patentanspruch 2. Vorteilhafte Ausgestaltungen der Vorrichtung nach Patentanspruch 3 ergeben sich aus den Patentansprüchen 4 bis 6.

Die Erfindung wird nachfolgend an Hand eines in den Zeichnungen dargestellten Ausführungsbeispiels näher erläutert. Es zeigt:

Fig. 1 eine Seitenansicht einer erfindungsgemäßen Meßvorrichtung;

Fig. 2 einen Querschnitt durch die Meßvorrichtung nach Fig. 1 längs der Schnittlinie II—II in Fig. 1, und

Fig. 3 eine Draufsicht auf die Meßvorrichtung nach Fig. 1 mit einem schematischen Blockschaltbild der Steuerungs- und der Auswerteeinrichtungen.

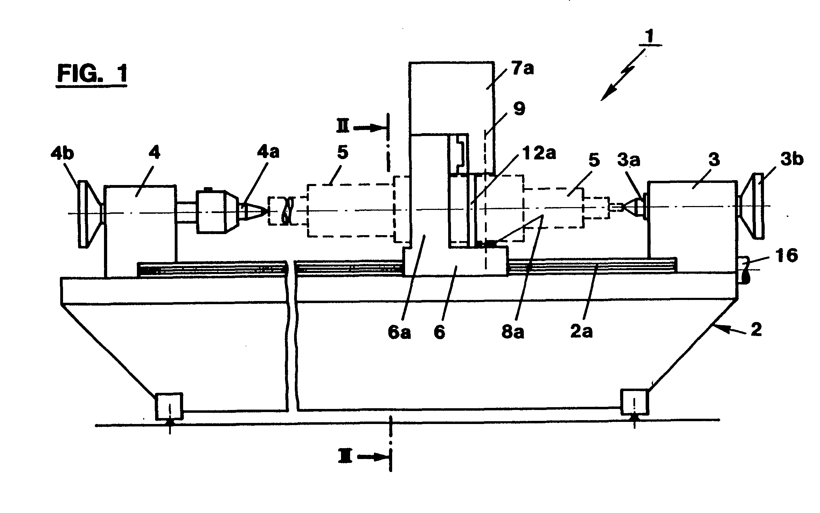

Die in Fig. 1 dargestellte Meßvorrichtung 1 weist einen auf dem Fußboden stehenden Meßtisch 2 auf, welcher aus einer massiven Gußplatte besteht. Auf dem Meßtisch 2 sind ein Spindelstock 3 und ein Reitstock 4 montiert, zwischen denen ein gestrichelt eingezeichnetes Prüfobjekt 5 eingespannt werden kann. Jeder der beiden Stöcke 3, 4 weist eine mittels eines Handrades 3b bzw. 4b drehbare Spindel 3a bzw. 4a auf, wobei die Spindelspitzen achszentrisch an den axialen Stirnseiten des Prüfabjekts 5, im dargestellten Beispielsfalle eine Welle mit mehreren radial unterschiedlichen Abschnitten, angreifen.

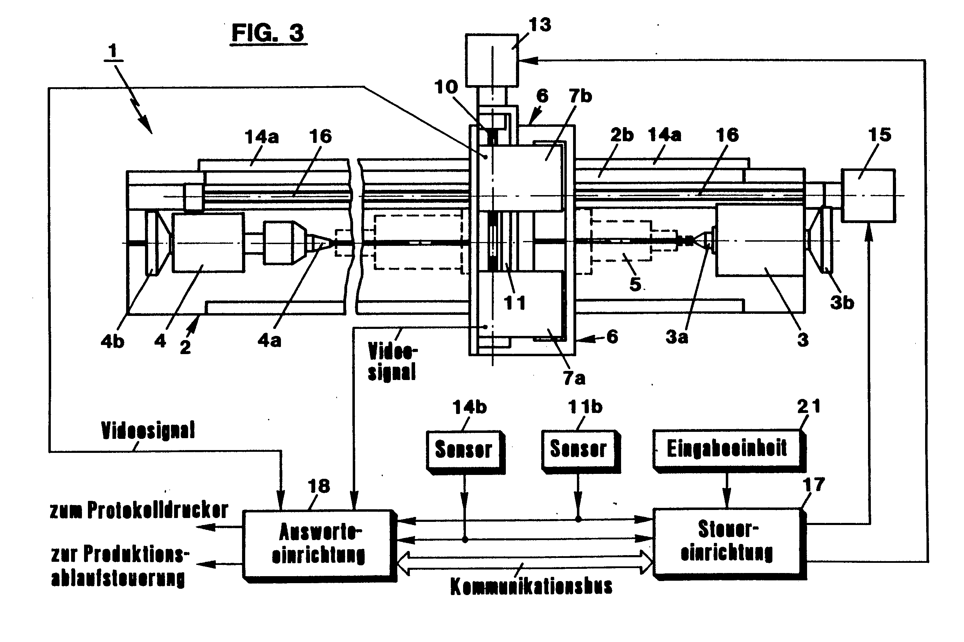

Der Meßtisch 2 weist über nahezu seine gesamte Länge verlaufende Führungsschienen 2a und 2b (in Fig. 1 nicht zu erkennen) auf, längs welcher ein Meßwagen 6 im gesamten Bereich zwischen den Stöcken 3, 4 bewegbar ist. Wie aus Fig. 3 näher ersichtlich ist, erfolgt diese Verschiebung des Meßwagens 6 mittels einer parallel zum Prüfobjekt 5 angeordneten Kugelumlaufspindel 16, die von einem elektrischen Antriebsmotor 15 schrittweise und kontinuierlich angetrieben wird.

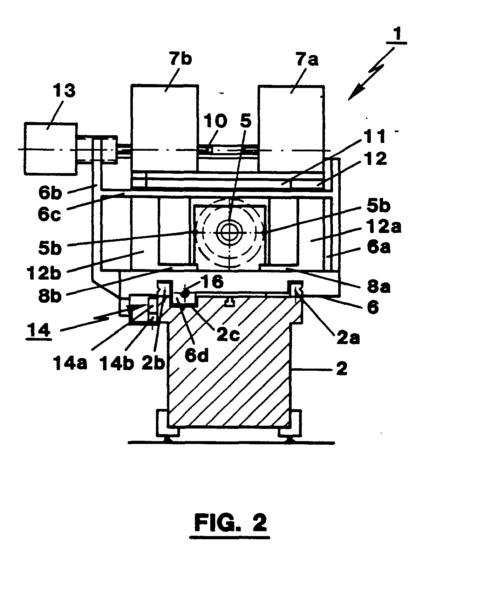

Der Meßwagen 6 besteht, wie aus Fig. 2 näher ersichtlich ist, aus einer unteren Tragplatte, auf welche ein Traggerüst mit Seitenstreben 6a, 6b und einer Querstrebe 6c befestigt ist. Auf der Unterseite der Tragplatte sind zwei Längsnuten zur Aufnahme der Führungsschienen 2a, 2b sowie ein Längsführungsstück 6d angeformt, welch letzteres in eine passende Führungsnut 2c des Meßtisches 2 eingreift. Die Spindel 16 durchsetzt das Längsführungsstück 6d, welches eine mit der Spindel 16 kämmende Gewindebohrung aufweist.

Der Meßwagen 6 umgreift das Prüfobjekt 5 vollständig, wie Fig. 2 zeigt. Dabei liegt die Querstrebe 6c oberhalb des prüfobjektes 5. Die Querstrebe 6c trägt zwei Fotodiodenzeilen 7a, 7b, welche in Querführungen 12 längs einer gemeinsamen Achse relativ zueinander bewegbar sind. Die Bewegungsachse der Fotodiodenzeilen 7a, 7b verläuft senkrecht zur Längsachse des Prüfobjektes 5, d.h. sie liegt in der Meßebene 9 (Fig. 1), welche mit einer Radialebene des Prüfobjektes 5 zusammenfällt.

Die Bewegung der Fotodiodenzeilen 7a, 7b verläuft dabei symmetrisch zur Längsachse des Prüfobjektes 5 und dient zur Einstellung der Fotodiodenzeilen 7a, 7b auf unterschiedliche Durchmesser des Prüfobjektes 5.

Jede Fotodiodenzeile ist in einer Kamera mit entsprechender Optik eingebaut, was hier nicht weiter erläutert zu werden braucht. Jedes Kameragehäuse weist einen nach unten ragenden, L-förmigen Ausleger 12a bzw. 12b auf, dessen waagrechter Schenkel eine linienförmige Beleuchtungsquelle 8a bzw. 8b trägt. Jede Beleuchtungsquelle 8a 8b verläuft achsparallel zur Bewegungsachse der beiden Fotodiodenzeilen 7a, 7b und ist so ausgerichtet, daß ihre Strahlung in die Optik der jeweiligen Fotodiodenzeilenkamera fällt. Bei der Bewegung der Fotodiodenzeilen 7a, 7b werden somit die Beleuchtungsquellen 8a, 8b gleichzeitig und in gleicher Weise mitbewegt.

Die Fotodiodenzeilen 7a, 7b und die Beleuchtungsquellen 8a, 8b werden so bezüglich des jeweiligen Prüfobjektes 5 positioniert, daß zwei diametral gegenüberliegende Konturpunkte 5a, 5b auf den Fotodiodenzeilen 7a, 7b abgebildet werden. Diese Abbildungen sind linienförmig entsprechend der linienförmigen Ausbildung der Beleuchtungsquellen 8a, 8b, wobei am Ort der Abbildung eines zugehörigen Konturpunktes 5a, 5b ein Intensitätssprung vorhanden ist. Dieser Intensitätssprung läßt sich aufgrund der Rasterung einer Fotodiodenzeile in seinen X-Y-Koordinaten leicht in bezug auf einen Referenzpunkt am Kameragehäuse angeben. Dies bedeutet, daß die Positionierung der Fotodiodenzeilen 7a, 7b nur gewährleisten muß, daß auf jeder Fotodiodenzeile der vom betreffenden Konturpunkt 5a, 5b hervorgerufene Intensitätssprung abgebildet wird, wobei die Lage dieses Intensitätssprunges durch Auswertung des Videosignals jeder Fotodiodenzeile 7a, 7b bestimmt wird. Durch Drehen des Prüfobjektes 5 lassen sich Konturpunktpaare längs des gesamten Umfangs des Prüfobjektes 5 nacheinander auf den Fotodiodenzeilen 7a, 7b abbilden.

Der Abstand zwischen jedem beleuchteten Konturpunktpaar, d.h., der Durchmesser des Prüfobjektes 5, ergibt sich aus der Lage der Intensitätssprünge auf den Fotodiodenzeilen 7a, 7b bezüglich des Referenzpunktes jeder Fotodiodenzeilenkamera sowie aus dem Abstand zwischen den beiden Referenzpunkten der Fotodiodenzeilenkameras. Um diesen Abstand zu ermitteln, der sich aufgrund der Positionierung der Fotodiodenzeilen 7a, 7b auf Prüfobjekte 5 unterschiedlichen Durchmessers verändert, ist achsparallel zur Bewegungsachse der beiden Fotodiodenzeilen 7a, 7b ein Glasmaßstab 11 an der Diodenzeile 7b angebracht. Der Glasmaßstab 11 ist ein linearer Inkrementalgeber, bestehend aus einer Glasschiene mit Hell-Dunkelmarkierungen, die von einem als Lichtschranke ausgebildeten Sensor optoelektronisch abgetastet werden. Im Falle des Glasmaßstabs 11 ist dieser Sensor 11b (Fig. 3, Blockschaltbildteil) an der Diodenzeile 7a befestigt.

Zur Bewegung der Fotodiodenzeilen 7a, 7b bezüglich des Meßwagens 6 durchsetzt eine Spindel 10 entsprechende Gewindebohrungen der Kameragehäuse für die Diodenzeilen 7a, 7b. Die Spindel 10 wird von einem elektrischen Antriebsmotor 13 angetrieben, welcher ebenso wie die Spindel 10 am äußeren Abschnitt der Seitenstrebe 6b gelagert ist. Damit lassen sich die Fotodiodenzeilen 7a, 7b mittels des Antriebsmotors 15 auf jede beliebige Radialebene des Prüfobjektes 5 und mittels des Antriebsmotors 13 auf jeden beliebigen Durchmesser (innerhalb eines weiten Durchmesserbereiches) des Prüfobjektes 5 einstellen. Es kann somit über die gesamte Länge des Prüfobjektes 5 in einer Vielzahl von Meßpunkten der Durchmesser und die Rundheit (aus mehreren Messungen in jeweils derselben Radialebene) ermittelt werden.

Um eine Information über die Position der Fotodiodenzeilen 7a, 7b bei ihrer Bewegung längs des Prüfobjektes 5 zu haben, ist, wie aus Fig. 3 ersichtlich ist, am Meßtisch 2 ein Glasmaßstab 14 angebracht. Die Glasschiene 14a befindet sich am Meßtisch 2, während sich der Sensor 14b (Fig. 2) des Glasmaßstabes 14 am Meßwagen 6 befindet. Der Ursprung des Glasmaßstabs 14 ist die Startposition des Meßwagens 6. Damit läßt sich auch die Länge des Prüfobjektes erfassen.

Zur Steuerung der Antriebsmotoren 13, 15 ist eine in Fig. 3 schematisch gezeigte Steuereinrichtung 17 vorgesehen, welche mit ihren Steuerbefehlsausgängen an die Steuereingänge der Motoren 13, 15 angeschlossen ist. Über die Sensoren 11b, 14b von den Glasmaßstäben 11, 14 erhält die Steuereinrichtung 17 Informationen über die momentanen Positionen des Meßwagens 6 und der Fotodiodenzeilen 7a, 7b. Über eine Eingabeeinheit 21 kann die Steuereinrichtung 17 in gewünschter Weise programmiert werden, insbesondere über die Anzahl der durchzuführenden Meßvorgange.

Die Auswertung der einzelnen Messungen erfolgt mittels einer ebenfalls nur schematisch angedeuteten Auswerteeinrichtung 18 welcher die Videosignale der Fotodiodenzeilen 7a, 7b sowie die Meßsignale der Glasmaßstäbe 11 und 14 zugeführt werden. Die Auswerteeinrichtung ermittelt für jede Einstellung des Meßwagens, d.h., für jede einzelne Meßebene 9, den Abstand jeden Konturpunktpaares, den mittleren Durchmesser und die Rundheit des Prüfobjektes. Diese Ermittlungen können über einen nicht dargestellten Protokolldrucker ausgedruckt werden. Ferner liefert im dargestellten Beipielsfall die Auswerteeinrichtung ihre Meßergebnisse an eine nicht dargestellte Produktionsablaufsteuerung, um aufgetretene Tolereranzabweichungen praktisch verzögerungsfrei bei der Produktion berücksichtigen zu können. Die Auswerteeinrichtung 18 kommuniziert mit der Steuereinrichtung 17, um die Meßprogramme bei der Auswertung entsprechend zu berücksichtigen. Diese Meßprogramme können auch Angaben über die Sollabmessungen einzelner Typen der Prüfobjekte enthalten, welche mit den zugeordneten Meßergebnissen zur Feststellung von Toleranzabweichungen verglichen werden.

Zum Einlegen bzw. Herausnehmen der Prüfobjekte 5 wird der Meßwagen hinter die Spitze der Spindel 4a zurückgefahren, um ein problemloses, freies Einlegen des Prüfobjektes 5 zu gewährleisten.

Bei einer ausgeführten erfindungsgemäßen Meßvorrichtung 1 betrug die beim Vermessen erzielte Auflösung 1 µm für die Durchmesserkontrolle und 0,002 mm für die Längenkontrolle. Auf dieser Meßvorrichtung lassen sich Metallwellen im Durchmesserbereich von 7 bis 100 mm mit einer Länge zwischen 200 und 700 mm vermessen.

**Patentansprüche**

1. Verfahren zum Ermitteln der Abmessungen eines länglichen Prüfobjektes, insbesondere des Durchmessers von Wellen, bei dem für jede Messung das Prüfobjekt von senkrecht zur Längsachse des Prüfobjektes ausgerichteten, linienförmigen Beleuchtungsquellen beleuchtet und zwei diametral gegenüberliegende Konturpunkte des Prüfobjektes auf zugeordneten, zeilenförmigen elektro-optischen Wandlern mittels Linien entsprechend der linierförmigen Ausbildung der Beleuchtungsquellen abgebildet werden, und bei dem aus der Lage der festgestellten Intensitätsänderungen der Linienabbildungen der Abstand zwischen den beiden Konturpunkten ermittelt wird, dadurch gekennzeichnet, daß vor jeder Messung zwei als Fotodiodenzeilen ausgeldete elektro-optische Wandler längs einer gemeinsamen Achse senkrecht zur Längsachse des Prüfobjektes in einer mit einer Radialebene des Prüfobjektes zusammenfallenden Meßebene verstellt werden und jede linienförmige Beleuchtungsquelle so ausgerichtet wird, daß ihre Strahlung in eine der jeweiligen Fotodiodenzeile zugeordnete Optik fällt, und daß aus der als elektrische Größen ermittelten Lage der Intensitätsänderung der Linienabbildung auf jeder Fotodiodenzeile bezüglich eines zugeordneten Referenzpunktes sowie aus dem Abstand der Referenzpunkte beider Fotodiodenzeilen senkrecht zur Längsachse des Prüfobjektes der Abstand zwischen beiden Konturpunkten bestimmt wird.

2. Verfahren nach Anspruch 1, dadurch gekennzeichnet, daß die beiden Fotodiodenzeilen und die beiden Beleuchtungsquellen zwischen aufeinanderfolgenden Messungen in Achsrichtung des prüfobjektes schrittweise bewegt werden, wobei die Entfernung der beiden Fotodiodenzeilen von einer Startposition als elektrische Größe ermittelt und in Bezug gesetzt wird zu dem für jeden Entfernungswert getrennt ermittelten Wert des Abstandes zwischen den beiden Konturpunkten des Prüfobjektes.

3. Vorrichtung zum Ermitteln der Abmessungen eines länglichen Prüfobjektes, insbesondere des Durchmessers von Wellen, mit einer Meßstation, welche das Prüfobjekt (5) umgreift und folgende Merkmale aufweist:

Zwei unterhalb des Prüfobjektes (5) in einer eine Meßebene (9) bildenden Radialebene des Prüfobjektes (5) angebrachte, linienförmige Beleuchtungsquellen (8a, 8b), welche das Prüfobjekt (5) beleuchten, und

zwei oberhalb des Prüfobjektes (5) im Strahlengang der Beleuchtungsquellen (8a, 8b) in der Meßebene (9) angebrachte, zeilenförmige elektro optische Wandler (7a, 7b),

dadurch gekennzeichnet, daß als Meßstation ein achsparallel zum eingespannten Prüfobjekt (5) bewegbarer Meßwagen (6) vorgesehen ist, daß der zeilenförmige elektro-optische Wandler aus zwei Fotodiodenzeilen (7a, 7b) besteht, welche in der Meßebene (9) des Prüfobjektes (5) längs einer gemeinsamen Achse verschiebbar sind, und daß folgende weitere Merkmale vorgesehen sind:

a) Eine verstellbare Spannbank (2, 3, 3a, 3b, 4, 4a, 4b) zum achszentrischen Einspannen des Prüfobjektes (5) an dessen axialen Stirnseiten;

b) zwei, mit jeweils einer Fotodiodenzeile (7a, 7b) verbundene Optiken zur Abbildung zweier diametral gegenüberliegender Konturpunkte (5a, 5b) des Prüfobjektes (5) auf den zugeordneten Fotodiodenzeilen (7a, 7b) mittels Linien entsprechend der linienförmigen Ausbildung der Beleuchtungsquellen;

c) ein parallel zur Verschiebungsachse der beiden Fotodiodenzeilen (7a, 7b) angebrachter Glasmaßstab (11) zur Ermittlung des Abstandes zwischen Referenzpunkten der beiden Fotodiodenzeilen (7a, 7b), und

d) eine elektrische Auswerteeinrichtung (17), welche aus der als elektrische Größe ermittelten Lage der Intensitätsänderung der Linienabbildungen in den Videosignalen der beiden Fotodiodenzeilen (7a, 7b) und den Meßsignalen des Glasmaßstabes (11) den Abstand zwischen den beiden Konturpunkten (5a, 5b) des Prüfobjektes (5) ermittelt.

4. Vorrichtung nach Anspruch 3, dadurch gekennzeichnet, daß an der Spannbank (2, 3, 3a, 3b, 4, 4a, 4b) achsparallel zum eingespannten Prüfobjekt (5) ein weiterer Glasmaßstab (14) zur Ermittlung der Entfernung der beiden Fotodiodenzeilen (7a, 7b) von einer Startposition angebracht ist.

5. Vorrichtung nach Anspruch 3 oder 4, dadurch gekennzeichnet, daß die beiden Fotodiodenzeilen (7a, 7b) in einer Querführung (12) des Meßwagens (6) geführt und mittels einer motorgetriebenen Spindel (10) bewegbar sind.

6. Vorrichtung nach einem der Ansprüche 3 bis 5, dadurch gekennzeichnet, daß der Meßwagen (6) mittels einer weiteren motorgetriebenen Spindel (16) parallel zum Prüfobjekt (5) bewegbar ist.

**Revendications**

1. Procédé pour déterminer les dimensions d'un échantillon de forme allongée, en particulier pour déterminer le diamètre d'arbres, selon lequel, pour chaque mesure, l'échantillon à mesurer est éclairé par des sources linéaires d'éclairage, d'orientation perpendiculaire à l'axe longitudinal de l'échantillon, et deux points diamétralement opposés du contour de l'échantillon sont reproduits au moyen de lignes sur des transducteurs électro-optiques en forme de barrettes coordonnés, conformément à la configuration linéaire des sources d'éclairage, et selon lequel la distance entre les deux points de contour est déterminée à partir de la position des variations d'intensité constatées des reproductions linéaires, caractérisé en ce que, avant chaque mesure, on règle deux convertisseurs électro-optiques, réalisés sous forme de barrettes de photodiodes, le long d'un axe commun perpendiculaire à l'axe longitudinal de l'échantillon, dans un plan de mesure coïncidant avec un plan radial de l'échantillon, et on oriente chaque source linéaire d'éclairage de manière que son rayonnement tombe dans une optique coordonnée à la barrette de photodiodes correspondante, et que l'on détermine la distance entre les deux points du contour à partir de la position relevée, sous forme de grandeurs électriques, de la variation d'intensité de la reproduction linéaire sur chaque barrette de photodiodes par rapport à un point de référence coordonné, ainsi qu'à partir de la distance des points de référence des deux barrettes de photodiodes perpendiculairement à l'axe longitudinal de l'échantillon.

2. Procédé selon la revendication 1, caractérisé en ce que l'on déplace les deux barrettes de photodiodes et les deux sources d'éclairage pas à pas dans le sens de l'axe de l'échantillon entre des mesures successives, en déterminant l'éloignement des deux barrettes de photodiodes d'une position de départ sous la forme d'une grandeur électrique et en établissant la corrélation entre cet éloignement et la valeur, déterminée séparément pour chaque valeur d'éloignement, de la distance entre 1.es deux points du contour de l'échantillon.

3. Dispositif pour déterminer les dimensions d'un échantillon de forme allongée, en particulier pour déterminer le diamètre d'arbres, dispositif qui comporte un poste de mesure qui entoure l'échantillon (5) et possède lesparticularités suivantes:

il comprend deux sources linéaires d'éclairage (8a, 8b) disposées sous l'échantillon (5) dans un plan radial formant un plan de mesure (9) de l'échantillon (5), et qui éclairent l'échantillon (5), et

il comprend deux transducteurs électro-optiques (7a, 7b) en forme de barrettes, dans le plan de mesure (9) disposés au-dessus de l'échantillon (5) et dans la marche des rayons des sources d'éclairage (8a, 8b), caractérisé en ce que l'on a prévu, en tant que poste de mesure, un chariot de mesure (6) déplaçable parallèlement à l'échantillon (5) monté dans le dispositif, que les transducteurs électro-optiques en forme de barrettes sont constitués par deux barrettes de photodiodes (7a, 7b) déplaçables le long d'un axe commun dans le plan de mesure (9) de l'échantillon (5), et en ce que le dispositif comprend en outre:

a) un banc de montage réglable (2, 3, 3a, 3b, 4, 4a, 4b) pour le montage, centré sur l'axe, de l'échantillon (5) par ses extrémités axiales;

b) deux optiques reliées chacune à une barrette de photodiodes (7a, 7b) pour la reproduction, au moyen de lignes, de deux points diamétralement opposés (5a, 5b) du contour de l'échantillon (5) sur les barrettes de photodiodes (7a, 7b) coordonnées, conformément à la configuration linéaire des sources d'éclairage;

c) une échelle en verre (11) installée parallèlement à l'axe de déplacement des deux barrettes de photodiodes (7a, 7b) et servant à déterminer la distance entre des points de référence des deux barrettes de photodiodes (7a, 7b), et

d) un dispositif d'exploitation électrique (18) qui détermine la distance entre les deux points (5a, 5b) du contour de l'échantillon (5) à partir de la position, déterminée sous la forme d'une grandeur électrique, de la variation d'intensité des reproductions linéaires dans les signaux vidéo des deux barrettes de photodiodes (7a, 7b), ainsi qu'à partir des signaux de mesure de l'échelle en verre (11).

4. Dispositif selon la revendication 3, caractérisé en ce qu'une échelle en verre supplémentaire (14) est installée sur le banc de montage (2, 3, 3a, 4, 4a, 4b), parallèlement à l'axe de l'échantillon (5) monté sur le banc, pour déterminer l'éloignement des deux barrettes de photodiodes (7a, 7b) par rapport à une position de départ.

5. Dispositif selon la revendication 3 ou 4, caractérisé en ce que les deux barrettes de photodiodes (7a, 7b) sont guidées dans une glissière transversale (12) du chariot de mesure (6) et sont déplaçables au moyen d'une broche filetée (10) commandée par un moteur.

6. Dispositif selon une des revendications 3 à 5, caractérisé en ce que le chariot de mesure (6) est déplaçable parallèlement à l'échantillon (5) au moyen d'une broche filetée supplémentaire (16) commandée par un moteur.

**Claims**

1. A method for ascertaining the dimensions of an elongated test specimen in particular the diameter of shafts in which for each measurement the test specimen illuminates vertically to the longitudinal axis of the test specimen aligned, linear sources of illumination and two diametrically opposite contour points of the test specimen are illustrated on associated line formed electro-optical transformers by means of lines corresponding to the linear formation of the sources of illumination and in which from the position of the determined intensity variations of the line illustrations the distance between the two contour points is ascertained, characterized in that before each measurement two electrooptical transformers constructed as photodiode arrays are moved along a common axis vertically to the longitudinal axis of the test specimen in a measuring plane coinciding with a radial plane of the test specimen and each linear source of illumination is so orientated that its radiation falls into a lens associated with the respective photodiode array and that from the position of the intensity variation ascertained as electrical magnitude the line illustration on each photodiode array relative to an associated reference point as well as from the distance of the reference points of both photodiode arrays vertically to the longitudinal axis of the test specimen the distance between both contour points is determined.

2. A method according to claim 1, characterized in that the two photodiode arrays and the two sources of illumination are moved step by step between successive measurements in axial direction of the test specimens whereby the distance of the two photodiode arrays from a starting position is ascertained as electrical magnitude and is related to the value of the distance between the two contour points of the test specimen ascertained separately for each distance value.

3. An apparatus for ascertaining the dimensions of an elongated test specimen in particular the diameter of shafts, having a measuring station which engages around the test specimen (5) and has the following characteristics:

two linear sources of illumination (8a, 8b) which illuminate the test specimen (5) under the test specimen (5) in a radial plane of the test specimen (5) forming a measuring plane (9) and

two line formed electro-optical transformers (7a, 7b) fixed above the test specimen (5) in the path of rays of the sources of illumination (8a, 8b) in the measuring plane (9),

characterized in that as measuring station a measuring carriage (6) is provided movable axially parallel to the clamped test specimen (5), that the line formed electrooptical transformer consists of two photodiode arrays (7a, 7b) which are movable in the measurement plane (9) of the test specimen (5) along a camera axis and that the following further characteristics are provided for:

a) An adjustable clamping bench (2, 3, 3a, 3b, 4, 4a, 4b) for the axialcentric clamping of the test specimen (5) on its axial front sides;

b) two lenses connected respectively to a photodiode array (7a, 7b) for the illustration of two diametrically opposite contour points (5a, 5b) of the test specimen (5) on the associated photodiode arrays (7a, 7b) by means of lines corresponding to the linear formation of the sources of illumination;

c) a glass gauge (11) fixed parallel to the axis of displacement of the two photodiode arrays (7a, 7b) for ascertaining the distance between reference points of the two photodiode arrays (7a, 7b) and

d) an electric evaluating apparatus (17) which from the position of the intensity variation of the line illustrations in the video signals of the two photodiode arrays (7a, 7b) and the measurement signals of the glass gauge (11) ascertained as electrical magnitude ascertains the distance between the two contour points (5a, 5b) of the test specimen (5).

4. An apparatus according to claim 3, characterised in that on the clamping bench (2, 3, 3a, 3b, 4, 4a, 4b) axially parallel to the clamped test specimen (5) a further glass gauge (14) is fixed for ascertaining the distance of the two photodiode arrays (7a, 7b) from a starting position.

5. An apparatus according to claim 3 or 4, characterized in that the two photodiode arrays (7a, 7b) are guided in a cross guide (12) of the measuring carriage (6) and movable by means of a motor-driven spindle (10).

6. An apparatus according to one of the claims 3 to 5, characterized in that the measuring carriage (6) is movable parallel to the test specimen (5) by means of a further motor-driven spindle (16).

FIG. 1

**FIG. 2**

FIG. 3

Eingabeeinheit

Sensor

Sensor

Steuer-einrichtung

Auswerte-einrichtung

Kommunikationsbus

Videosignal

Videosignal

zum Protokolldrucker

zur Produktions-ablaufsteuerung